# EUROPEAN PATENT APPLICATION

(11) **EP 1 026 905 A2**
(43) Date of publication of application: **09.08.2000**
(21) Application number: 00300629.3
(22) Date of filing: 27.01.2000
(51) Int. Cl.: H04Q 3/56, H04Q 3/00

(54) **System and method to efficiently transmit signals in a common channel signalling network**

(30) Priority: 28.01.1999 US 117884 P; 02.08.1999 US 366288
(71) Applicant: NORTEL NETWORKS CORPORATION, Montreal, Quebec H2Y 3Y4 (CA)
(72) Inventor: Zaharychuk, John, Simi Valley, California 93063 (US)
(74) Representative: Wombwell, Francis

(57) **Abstract**

The present invention discloses a system and method to efficiently transmit common channel signaling (CCS) data in a switching network. The system includes a transmitting access device, a receiving access device, and a network coupling together the access devices. The transmitting access device receives CCS data from an attached private branch exchange (PBX). The transmitting access device examines the CCS data to determine whether the data is relevant or irrelevant. If the CCS data is relevant, the transmitting access device constructs a packet or frame to hold the CCS data, and routes the constructed packet or frame through the network to a receiving access device. If the CCS data is irrelevant, the transmitting access device discards the data without routing it to conserve network bandwidth.

## Description

### FIELD OF THE INVENTION

This invention relates generally to the field of telecommunication networks, and particularly to a system and method to efficiently transmit common channel signals in a switching network.

### BACKGROUND OF THE INVENTION

Telecommunication networks were developed to provide circuit switched connections. Circuit switched connections are a procedure where network equipment and facilities are dedicated to a connection for the length of a communication session. Circuit switched connections are separated into two main categories, voice and data. The reason for this separation is that there are different requirements for each type of call.

The procedure used to initiate, monitor and release circuit switched connections is known as signaling. Common channel signaling (CCS) is a method by which signaling are transmitted over circuit switch connections or channels which are independent from the connections employed to carry voice data.

Telecommunication networks should operate as efficiently as possible to support as many users as possible since a higher user volume results in more generated revenues. Therefore, voice data and signaling data should be transmitted from one endpoint to another endpoint using as little bandwidth as possible.

### SUMMARY OF THE INVENTION

The present invention discloses a system and method to efficiently transmit common channel signaling (CCS) data in a switching network. The system includes a transmitting access device, a receiving access device, and a network coupling together the access devices.

In accordance with one embodiment of the present invention, the transmitting access device receives CCS data from an attached private branch exchange (PBX). The transmitting access device examines the CCS data to determine whether the data is relevant or irrelevant. If the CCS data is relevant, the transmitting access device constructs a packet or frame to hold the CCS data, and routes the constructed packet or frame through the network to a receiving access device. If the CCS data is irrelevant, the transmitting access device discards the data without routing it to conserve network bandwidth.

In accordance with another embodiment of the present invention, the transmitting access device includes a voice module and a network module. In one embodiment, the voice module receives CCS data and forwards the data to the network module over a signaling cable using a High-Level Data Link Control (HDLC) protocol. In using a signaling cable, a relative inexpensive physical medium is provided for transferring CCS data.

The above described and many other features of the present invention will become apparent as the invention becomes better understood by reference to the following detailed description when considered in conjunction with the accompanying drawings.

### BRIEF DESCRIPTION OF THE INVENTION

Figures 1 and 2 show a telecommunication network system in accordance with one embodiment of the present invention;
Figure 3 illustrates a block diagram of access device in accordance with one embodiment of the present invention;
Figure 4 depicts the structure of a High-Level Data Link Control (HDLC) frame;
Figure 5 is a flow chart outlining the processing of the HDLC frame shown in Figure 4;
Figure 6 shows a rear plan view of an access device; and
Figure 7 illustrates the pin mappings of connectors on a signal cable in accordance with one embodiment of the present invention.

### DETAILED DESCRIPTION OF THE INVENTION

The present invention discloses a system and method to efficiently transmit common channel signals in a switching network.

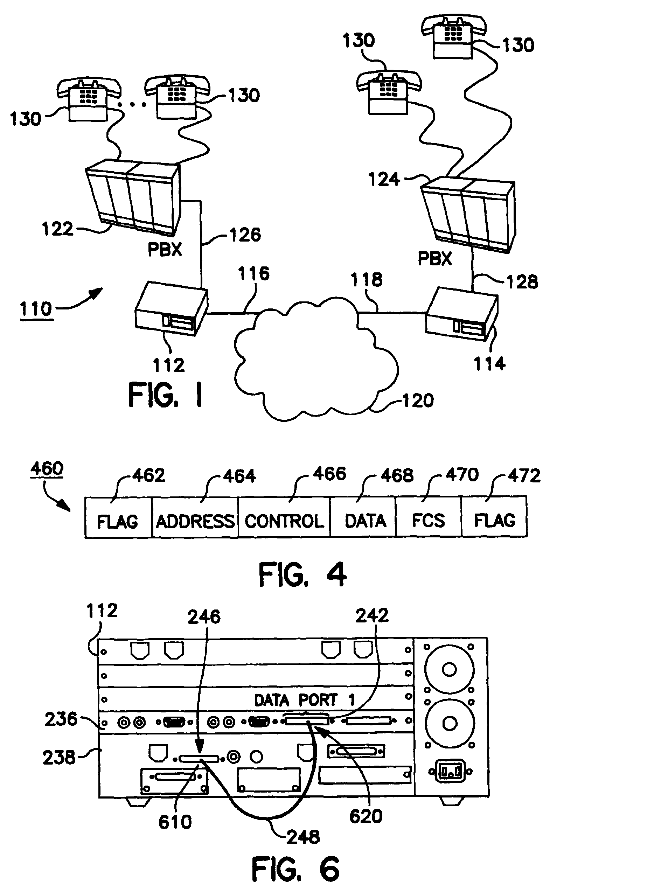

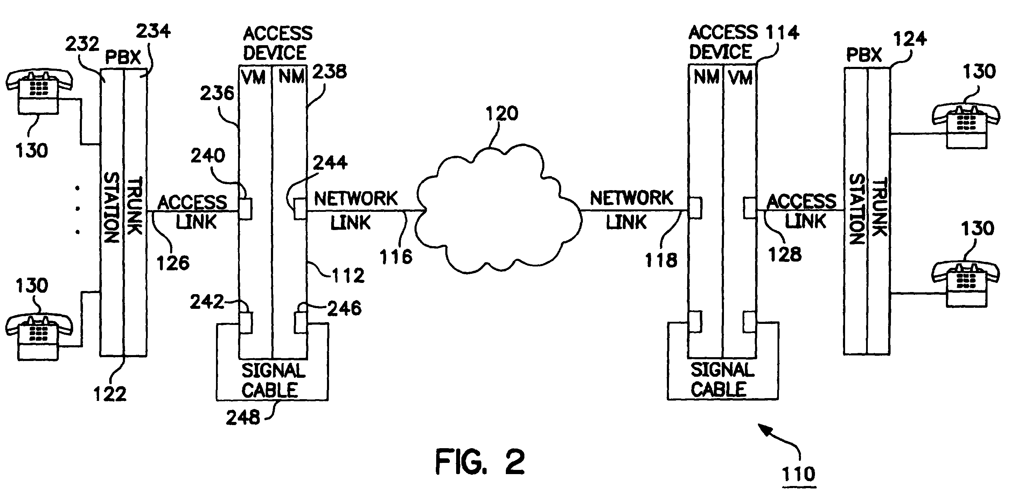

Figures 1 and 2 show a telecommunication system 110 in accordance with one embodiment of the present invention. Referring to Figure 1, access devices 112 and 114 are coupled together by network links 116 and 118 and network 120. Access devices 112 and 114 are coupled to private branch exchange (PBX) 122 and 124 respectively. The private branch exchanges 122 and 124 are typically installed at customer sites. Each PBX 122 or 124 is connected to a plurality of telephones 30.

Network 120 employs a packet switching protocol that supports shared services to allow multiple customers to use the network 120 simultaneously. In one embodiment, the frame relay protocol is used. Each PBX 122 or 124 gains access to the network 120 through an access device 112 or 114. In one embodiment, an access device 112 or 114 is a router with frame relay capability. Access devices 112 and 114 assemble data to be sent between locations into frames. Each frame contains the target address, which is used to direct the frame through the network to its proper location. Once the frame enters the shared network 120, any number of networking technologies, including frame relay, can be employed to carry the frame.

Each PBX 122 or 124 is connected to an access device through an access link 126 or 128. In one embodiment, an access link 126 or 128 can be a digital signal level one (DS-1) Line. In North America, including United states and Canada, a DS-1 line is equivalent to a trunk level one (T1) that is capable of carrying infatuation at the transfer rate of 1.544 Mbps. Outside of North America, a DS-1 line is equivalent to an E-1 line that has a transfer rate of 2.048 Mbps. The access link 126 or 128 is divided into data signal, level zero (DS-0) channels. Each DS-0 channel has a transfer rate of 64-Kbps. Accordingly, a T-1 access link has twenty four DS-0 channels, and an E1 access link has thirty two DS-0 channels.

The path defined between source and destination access devices 112 and 114 is known as a virtual circuit. Access devices 112 and 114 supports permanent virtual circuits (PVC). Each PVC is a logical point-to-point virtual circuit that is set up only when access devices 112 and 114 are initially activated to establish the circuit or when the access devices are reset. Thus a PVC may exist for a long duration. In one embodiment, one PVC is established or set up for a group of DS-0 channels to carry voice and one signaling channel to carry transparent common channel signaling (CCS) data. A more detailed description of the signaling channel is provided below. Access devices 112 and 114 are responsible for negotiating and creating virtual circuits for DS0 and CCS channels or connections.

Referring to Figure 2, PBX 122 has a station portion 232 to which telephones 130 are coupled, and a trunk portion 234 to which an access link 126 is coupled. Access device 112 has a voice module (VM) 236 to process data from access link 126. Voice module 236 has an access link interface 240 to receive data trait access link 126, and a bi-directional data port 242 to which one end of signal cable 248 is coupled. Access device 112 also has a network module (NM) 238 to access the network 120 through network link 116. Network module 238 has a network link interface 244 to which network link 116 is coupled, and a bi-directional data port 246 to which one end of signal cable 248 is coupled. In one embodiment, signal cable 48 is used to carry common channel signaling (CCS) data between voice module 236 and network module 238.

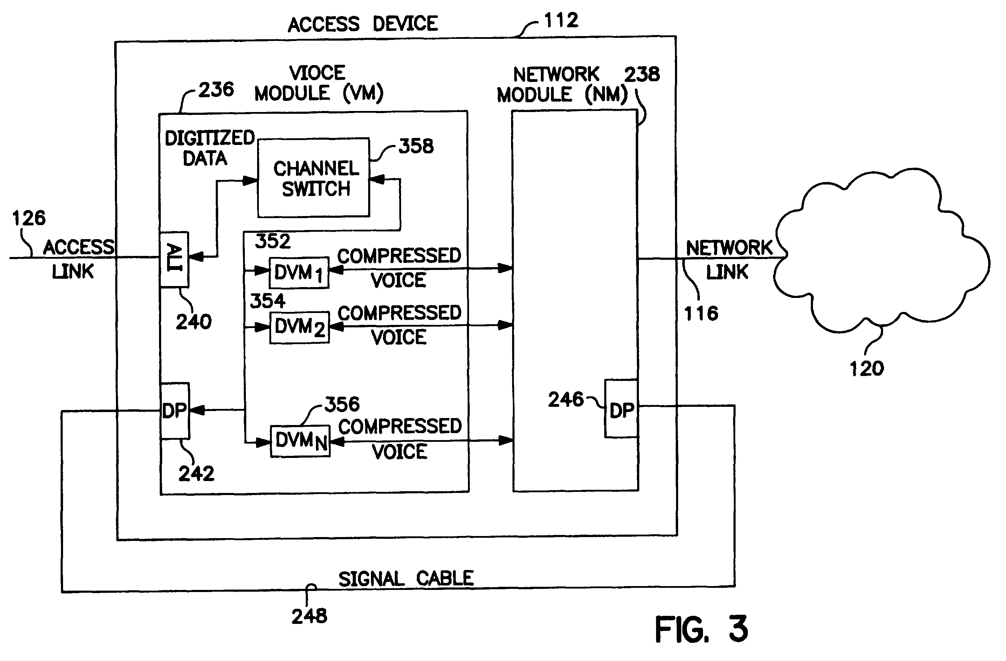

Figure 3 illustrates a block diagram of access device 112. Voice module 236 has a bi-directional data port 242 and a plurality of digital voice modules 352, 354, and 356. In one embodiment, data port 242 is a bi-directional high-speed synchronous interface capable of carrying 512 Kbps. Channel switch 358 directs incoming data received from access link interface 240 to data port 242 or digital voice modules 352, 354, and 356.

As stated above, an access link 126 can be a T-1 or E-1 line, capable of carrying information at the transfer rate of 1.544 Mbps or 2.048 Mbps, respectively. The T-1 or E-1 line is logically divided into DS-0 or 64-Kbps channels. Accordingly, a T-1 line has twenty four DS-0 channels. Twenty three DS-0 channels in a T-1 line carry voice data, and one DS-0 channel is reserved for signaling data. An E-1. line has thirty two DS-0 channels. Thirty one DS-0 channels in the E-1 line carry voice data, and one DS-0 channel carries signaling data.

Each digital voice module (DVM) 352, 354, or 356 processes digitized voice data from one DS-0 channel in the access link 126. In one embodiment, a well-known voice digitizing technique called Pulse Code Modulation (PCM) is employed. PCM requires 64 Kbps of bandwidth which is optimized for clear speech quality, but is not very efficient for integrated networking applications. Thus, each DVM 352, 354, and 356 contains a compression algorithm that is used to compress PCM digitized voice data from one DS-0 channel to produce compressed voice data. An example of voice compression algorithm is defined in International Telecommunications Union (ITU) G.729. The G.279 standard provides toll quality voice and uses only 8 Kbps of bandwidth. Once the digitized voice data are compressed, the digital voice modules 352, 354, and 356 send the compressed voice data onto the network module 238.

One of the DS-0 channels of access link 126 is the signaling channel that carries common channel, signaling (CCS) data. The present invention supports all CCS protocols. Examples of CCS protocols include Signal System 7 (SS7), International Telecommunications Union (ITU) Q.921/931, QSIG. Digital Private Network Signaling System (DPNSS), and the like. As stated above, access link 126 can be a T-1 or E-1 line. In a T-1 line, the DS-0 channel for time slot number twenty four is the signaling channel that carries CCS data. In an E-1 line, the DS-0 channel for time slot number sixteen is the signaling channel. Channel switch 358 directs incoming CCS data from the signaling channel to data port 242 of voice module 236. CCS data is then relayed over signal cable 248 to data port 246 of network module 238. Network module 238 then tunnels the CCS data to remote access device 114 (shown in Figures 1 and 2) via network 120.

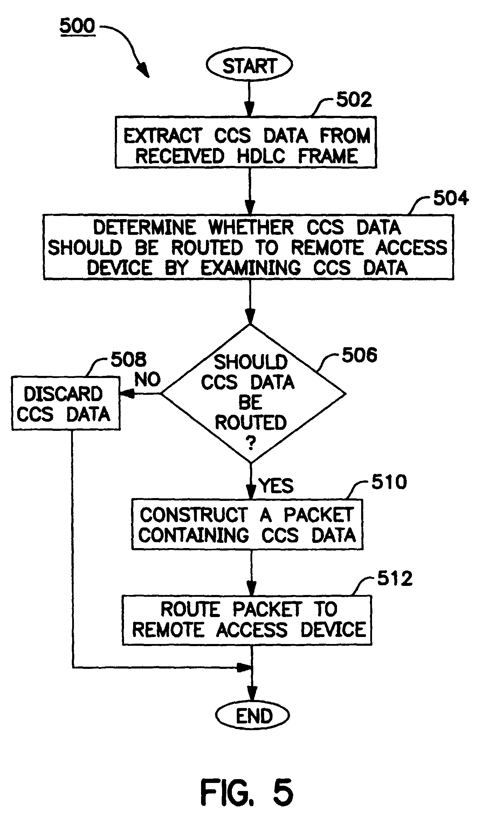

In one embodiment, CCS data is transmitted between voice module 36 and network module 38 using the High-Level Data Link Control (HDLC) protocol. HDLC is a synchronous data transmission protocol developed by the International organization for Standardization (ISO). HDLC transmissions are done using frames, and a Single frame format suffices for all types of data and control exchanges. Figure 4 depicts the structure of a HDLC frame 460. Each HDLC frame has the following fields: flag 462, address 464, control 466, data 468, frame check sequence (FCS) 470, and flag 472.

Flag fields 462 and 472 delimit an HDLC frame 460. A single flag may be used as the closing flag for one HDLC frame and the opening flag for the next HDLC frame. Address field 464 is used to identify a secondary station that is to receive the HDLC frame in point-to-multipoint connections. Address field 464 is not needed for point-to-point connections (as in the present invention), but is always included for the sake of uniformity.

HDLC defines three types of frames, each with a different control field format. Information frames (I-frames) carry user data. Additionally, flow and error control data may be piggybacked on an I-frame. Supervisory frames (S-frames) provide the control data when piggybacking is not used, and un-numbered frames (U-frames) provide supplemental control data. Control field 466 is used to identify the type of frame.

Data field 468 is present only in I-frames and some U-frames. Data field can contain any sequence of bits. Its length is undefined in the standard, but is generally limited by each implementation to a specified maximum. Frequently, the length must be a multiple of eight bits. In the present invention, the data field is used to carry signaling data from data port 242 on voice module 236 to data port 246 of network module 238, as shown in Figures 1 and 2.

Returning to Figure 4, frame check sequence (FCS) 470 is a checksum applied to bits in the address 464, control 466, and data 468 fields. A typical FCS is a 16-bit Cyclic Redundancy Check (CRC). An optional 32-bit FCS,using CRC-32, may be employed if the frame length dictates this choice.

Referring to Figure 5, a flow chart 500 outlining the processing of HDLC frames 460 (shown in Figure 4) containing the signaling data. As shown in block 502 of figure 5, network module 38 (shown in Figures 1 and 2) extracts CCS data from an HDLC frame 460 upon receiving the frame 460. The extracted CCS data is examined to determine whether the data is relevant and should be routed to a remote access device (block 504). If the CCS data is relevant and should be routed to a receiving access devise, network module constructs a packet or frame containing the signaling data (block 510), and routes the packets or frames to remote access device (block 512). If the CCS data is irrelevant and should not be routed, it will be discarded, as shown in block 508, to conserve network bandwidth. For example, Signal System 7, a well-known CCS protocol, requires that a fill-in signal unit (FISU) is sent to a remote access device during idle periods. The idea of the FISU is to provide enough of a signal unit that virtual circuit integrity can be checked even when the circuit idles. In the present system, access device 112 (shown in Figures 1 and 2) will consider the FISU to be irrelevant CCS data and will not route the FISU to a remote access device to conserve bandwidth.

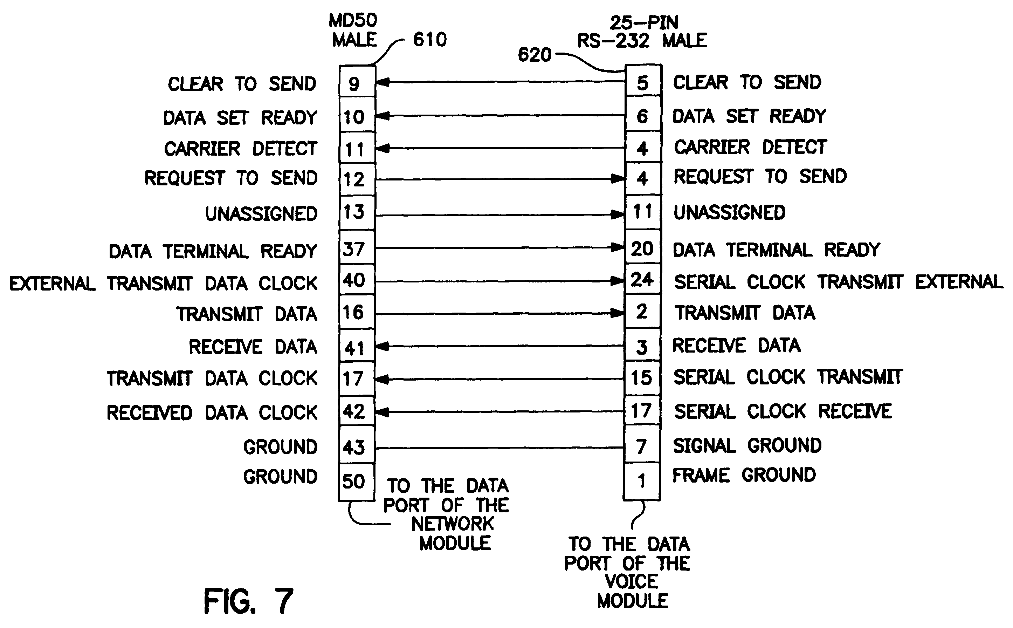

Figure 6 shows a rear plan view of an access device 112. A signal cable 48 is shown connecting data port 242 of voice module 236 to data port 246 of network module 238. In one embodiment, the signal cable 48 has an MD50 male connector at the end 610 which is connected to network module 238, and an RS-232 male connector at the end 620 Which is connect to the voice module 36. The pin mappings of the connectors are shown in Figure 7.

It should be noted that the aforementioned MD50 and RS-232 connectors merely represent one exemplary embodiment. It should be obvious to persons skilled in the art that other types of connectors may alternatively be used, so long as the connectors are configured to enable transmissions of HDLC frames. Furthermore, a physical medium other than a signal cable 248 (shown in Figures 2 and 3) may be used to enable the transmission of CCS data using the HDLC protocol. For example, the CCS data may be transmitted over a direct connection between the channel switch 358 and network module 238 (shown in. Figure 3).

Accordingly, while certain exemplary embodiments have been described and shown in the accompanying drawings, it is to be understood that such embodiments are merely illustrative of end not restrictive on the broad invention, and that this invention not be limited to the specific constructions and arrangements shown and described, since various other modifications may occur to those ordinarily skilled in the art.

## Claims

1. A telecolumunication system, comprising:
a transmitting access device to forward common channel signaling (CCS) data, the transmitting access device discarding a first CCS data and transmitting only a second CCS data; and
a receiving access device to receive the second CCS data from the transmitting access device.

2. The system of claim 1, wherein the first CCS data comprises signaling data transmitted during an idle period.

3. The system of claim 1, wherein the second CCS data comprises signaling data used to manage calls.

4. The system of claim 1, further comprises a network coupled between the transmitting access device and the receiving access device.

5. The system of claim 1, wherein:
the transmitting access device is coupled to a first private branch exchange (PBX); and
the receiving access device is coupled to a second private branch exchange (PBX).

6. The system of claim 1, wherein the transmitting access device comprises:
a voice module to receive common channel signaling (CCS) data from a first private branch exchange (PBX);
a network module to receive the CCS data from the voice module and to route the voice data to the receiving access device; and
a communication link coupled between the voice module and the network module to allow the voice module to transmit CCS data to the network module.

7. The system of claim 6, wherein the network module receives the CCS data from the voice module through a High-Level Data Link Control (HDLC) protocol.

8. The system of claim 6, wherein the voice module further comprises a plurality of digital voice modules to compress digitized voice data.

9. The system at claim 6, wherein the voice module further comprises a channel switch to direct the CCS data to a bi-directional data port and voice data to digital voice modules.

10. An access device in a telecommunication network, comprising:
a voice module to receive common channel signaling (CCS) data from a private branch exchange (PBX); and
a network module to discard fill-in signal units (FISU).

11. The access device of claim 10, wherein the fill-in signal, units (FISU) include CCS data transmitted during idle periods.

12. The access device of claim 10, wherein the voice module sends the CCS data to the network module over a communication link.

13. The access device of claim 10, wherein the voice module sends the CCS data to the network module over a direction connection between the voice module and the network module.

14. The access device of claim 10, wherein the voice module sends the CCS data to the network module using a High-Level Data Link Control (HDLC) protocol.

15. The access device of claim 10, wherein the voice module includes a channel switch to direct voice data to digital voice modules and CCS data to a bi-directional data port.

16. The access device of claim 10, wherein the network module discards irrelevant CCS data to conserve network bandwidth.

17. The access device of claim 10, wherein the network module constructs a frame to store relevant CCS data and routes the frame over a network to a destination.

18. A method to transmit data, comprising:
receiving common channel signaling (CCS) data;
determining whether the CCS data is a first CCS data, or a second CCS data;
routing the first CCS data to a predetermined destination; and
discarding the second CCS data.

19. The method of claim 18, wherein determining whether the CCS data is a first CCS data or a second CCS data comprises:
determining whether the first CCS data comprises signaling data transmitted during an idle period; and
determining whether the second CCS data comprises signaling data comprises signaling data used to manage calls.

20. The method of claim 18, further comprising:
directing the CCS data to a bi-directional data port; and
directing voice data to digital voice modules.

21. The method of claim 18, further comprising compressing incoming digitized voice data.

22. The method of claim 18, further comprising forwarding the CCS data from a voice module over a signal cable to a network module.

23. The method of claim 18, further comprising forwarding the CCS data from a voice module to a network module using a High-Level Data Link Control (HDLC) protocol.

24. The method of claim 18, further comprising:
constructing a frame to hold the CCS data; and
routing the frame over a network to the predetermined destination.
